(19) Europäisches Patentamt
European Patent Office
Office européen des brevets

(11) Veröffentlichungsnummer: **0 258 180**
**A2**

(12) # EUROPÄISCHE PATENTANMELDUNG

(21) Anmeldenummer: **87810439.7**

(22) Anmeldetag: **31.07.87**

(51) Int. Cl.⁴: **C 09 B 23/10**

(30) Priorität: **06.08.86 CH 3158/86**

(43) Veröffentlichungstag der Anmeldung:
**02.03.88 Patentblatt 88/09**

(84) Benannte Vertragsstaaten: **CH DE FR GB LI**

(71) Anmelder: **CIBA-GEIGY AG**
**Klybeckstrasse 141**
**CH-4002 Basel (CH)**

(72) Erfinder: **Naef, Rudolf, Dr.**
**Im Budler 6**
**CH-4419 Lupsingen (CH)**

(54) **Dispersionsfarbstoffe.**

(57) Die neuen Dispersionsfarbstoffe der im Anspruch 1 angegebenen Formel eignen sich insbesondere zum Färben von Textilmaterialien aus Polyester. Man erhält rote bis grüne Färbungen.

EP 0 258 180 A2

**Beschreibung**

Dispersionsfarbstoffe

Die vorliegende Erfindung betrifft neue Dispersionsfarbstoffe, Verfahren zu deren Herstellung sowie deren Verwendung als Farbstoffe zum Färben und Bedrucken von halbsynthetischem oder synthetischem hydrophobem Material.

Die neuen Dispersionsfarbstoffe entsprechen der Formel

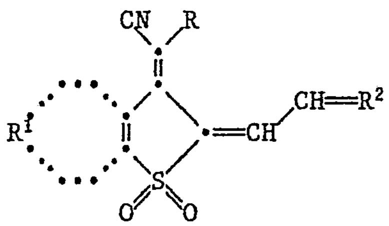

(1)

worin

R Cyano, Alkoxycarbonyl mit 1 bis 6 Kohlenstoffatomen im Alkoxyteil, Alkylcarbonyl mit 1 bis 6 Kohlenstoffatomen im Alkylteil, Aminocarbonyl, gegebenenfalls N-mono- oder N,N-disubstituiert mit $C_1$-$C_6$-Alkyl oder Nitro,

$R^1$ den Rest eines aromatischen Systems und

$R^2$ den Rest eines 5- oder 6-gliedrigen Ringes mit mindestens einem Stickstoffatom und mindestens einer Doppelbindung, an den aromatische Ringe ankondensiert sein können, bedeutet.

Vorzugsweise handelt es sich um Verbindungen der Formel (1), worin R Cyano und $R^1$ den Rest eines gegebenenfalls substituierten Benzol-oder Naphthalinrings bedeuten.

Bei den Substituenten R handelt es sich neben dem besonders bevorzugten Cyan (-CN) ferner noch um Nitro, Alkoxycarbonyl (-COOR′), worin R′ Alkyl mit 1 bis 6, vorzugsweise 1 bis 4 Kohlenstoffatomen ist, wie z.B. Methyl, Ethyl, n-Propyl, n-Butyl sowie entsprechende isomere Substituenten, wie iso-Propyl, iso-Butyl oder tert.-Butyl; ferner ist R Alkylcarbonyl (-COR′), Aminocarbonyl ($-CONH_2$) oder ein N-mono-oder N,N-disubstituiertes Aminocarbonyl (-CONHR′ oder -CONR′R′), worin R′ jeweils die angegebenen Bedeutungen aufweist.

Als Substituenten am Ring $R^1$ kommen die bei Dispersionsfarbstoffen üblichen, nichtionogenen Substituenten in Frage. Es handelt sich vor allem um Chlor, Brom, Hydroxy, Amino, $C_1$-$C_4$-Alkyl, Phenyl, $C_1$-$C_4$-Alkoxy, Phenoxy, Cyan, Nitro, $C_1$-$C_4$-Alkylsulfonyl, Aminosulfonyl, Mono- oder Di-$C_1$-$C_4$-alkylaminosulfonyl, Phenylaminosulfonyl, N-Phenyl-N-$C_1$-$C_2$-alkylaminosulfonyl, $C_1$-$C_6$-Alkoxycarbonyl, Phenoxycarbonyl, Aminocarbonyl, Mono- oder Di-$C_1$-$C_4$-alkyl-aminocarbonyl, Phenylaminocarbonyl oder N-Phenyl-N-$C_1$-$C_2$-alkyl-aminocarbonyl, $C_1$-$C_6$-Alkylcarbonyloxy, Chlor-oder Brom-$C_1$-$C_2$-alkylcarbonyloxy, $C_1$-$C_6$-Alkoxycarbonyloxy, $C_1$-$C_2$-Alkoxy-$C_2$-$C_6$-alkoxycarbonyloxy, Phenoxycarbonyloxy, $C_1$-$C_4$-Alkylsulfonyloxy, Phenylsulfonyloxy, $C_1$-$C_4$-Alkylcarbonylamino, $C_1$-$C_2$-Alkoxy-$C_{2-4}$-alkoxycarbonylamino, Chlor- oder Brom-$C_1$-$C_2$-alkylcarbonylamino, $C_1$-$C_4$-Alkocycarbonylamino, Phenoxycarbonylamino, Amino-carbonylamino, Mono- oder Di-$C_1$-$C_4$-alkylaminocarbonylamino, Phenylaminocarbonylamino, N-Phenyl-N-$C_1$-$C_2$-alkylaminocarbonylamino, Benzoyloxy, Naphthoyloxy, Benzoylamino, Di-$C_1$-$C_4$-alkylaminosulfonyloxy, Mono- oder Di-$C_1$-$C_4$-alkylaminocarbonyloxy oder Phenylaminocarbonyloxy.

In bevorzugten Farbstoffen der Formel (1) stellt $R^1$ den Rest eines Benzolringes dar, welcher unsubstituiert ist oder substituiert durch Chlor, Brom, Hydroxy, $C_1$-$C_4$-Alkoxy, Cyan, Nitro, $C_1$-$C_2$-Alkyl, $C_1$-$C_6$-Alkoxycarbonyl, Phenoxycarbonyl, Aminocarbonyl, Mono- oder Di-($C_1$-$C_4$-alkyl)-aminocarbonyl, Phenylaminocarbonyl, N-Phenyl-N-$C_1$-$C_2$-alkyl-aminocarbonyl, $C_1$-$C_6$-Alkylcarbonyloxy, Benzoyloxy, $C_1$-$C_6$-Alkoxycarbonyloxy oder Phenoxycarbonyloxy.

Der Rest $R^2$ stellt vorzugsweise einen der folgenden Reste dar:

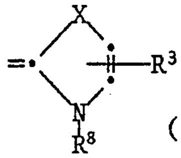 (2)

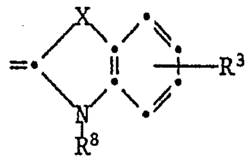 (3)

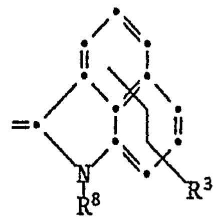 (4)

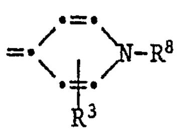 (5)

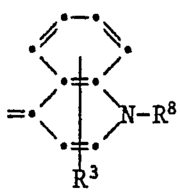 (6)

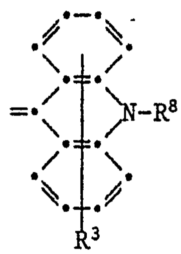 (7)

worin
$R^8$ einen $C_1$-$C_6$-Alkylrest,
X -O-, -S-, -CH=CH-, $-NR^4-$ oder

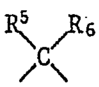

ist, wobei $R^4$ Wasserstoff, Phenyl oder $C_1$-$C_6$-Alkyl, $R^5$ und $R^6$ unabhängig voneinander je $C_1$-$C_4$-Alkyl oder $R^5$ und $R^6$ zusammen mit dem C-Atom, an das sie gebunden sind, einen $C_5$-$C_7$-Cycloalkylrest bedeuten, und $R^3$ Wasserstoff, Chlor, Brom, Hydroxy, $C_1$-$C_4$-Alkyl, $C_1$-$C_4$-Alkoxy, Cyano, Nitro, Amino, Mono- oder Di-($C_1$-$C_4$-alkyl)-amino, Phenylamino, Phenoxy, Phenyl, $C_1$-$C_4$-Alkylsulfonyl, Aminocarbonyl, Mono-oder Di-($C_1$-$C_4$-alkyl)-aminocarbonyl, $C_1$-$C_6$-Alkoxycarbonyl, Phenoxycarbonyl, Phenylaminocarbonyl, N-Phenyl-N-$C_1$-$C_2$-alkylaminocarbonyl, $C_1$-$C_6$-Alkyl-carbonyloxy, Benzoyloxy, $C_1$-$C_6$-Alkoxycarbonyloxy, Phenoxycarbonyloxy, Aminosulfonyl, Mono- oder Di-($C_1$-$C_4$-alkyl)-aminosulfonyl ist.

In der vorliegenden Anmeldung bedeutet Alkyl unverzweigtes oder verzweigtes Alkyl, welches gegebenenfalls substituiert sein kann, z.B. durch Hydroxy, Cyan, Chlor, Brom, Alkoxy, Cyanalkoxy, Alkylcarbonyloxy oder Phenyl.

Die als Substituenten genannten Phenylreste können ebenfalls weiter substituiert sein, z.B. durch Hydroxy, Chlor, Brom, Cyano, Nitro, $C_1$-$C_4$-Alkyl, $C_1$-$C_4$-Alkoxy oder Amino.

Besonders bevorzugte Farbstoffe der Formel (1) sind diejenigen, worin $R^2$ einen Rest der Formel

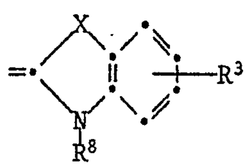 (8)

darstellt, worin
$R^8$ einen $C_1$-$C_4$-Alkylrest,
X -S-, -CH=CH- oder

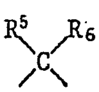

ist, worin $R^5$ und $R^6$ je Methyl oder Ethyl oder $R^5$ und $R^6$ zusammen mit dem C-Atom, an das sie gebunden sind, Cyclohexyl bedeuten und
$R^3$ Wasserstoff, Chlor, Brom, Nitro, Cyano, $C_1$-$C_4$-Alkoxy, $C_1$-$C_2$-Alkyl, Amino, Mono- oder Di-($C_1$-$C_4$)-alkylamino, Hydroxy, Phenoxy oder Phenylamino ist.

Wegen ihrer leichten Zugänglichkeit und der guten färberischen Eigenschaften sind die Farbstoffe der Formel

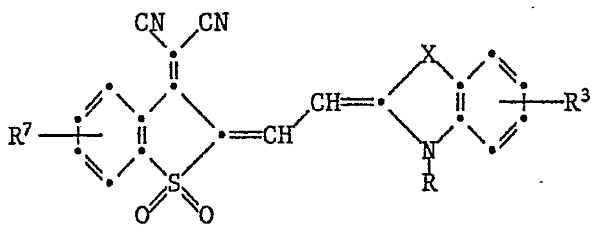

(9)

worin
R einen $C_1$-$C_4$-Alkylrest,
X -S-, -CH=CH- oder

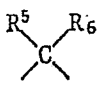

ist, worin $R^5$ und $R^6$ je Methyl oder Ethyl oder $R^5$ und $R^6$ zusammen mit dem C-Atom, an das sie gebunden sind, Cyclohexyl bedeuten und
$R^3$ Wasserstoff, Chlor, Brom, Nitro, Cyano, $C_1$-$C_4$-Alkoxy, $C_1$-$C_2$-Alkyl, Amino, Mono- oder Di-($C_1$-$C_4$)-alkylamino, Hydroxy, Phenoxy oder Phenylamino und
$R^7$ Wasserstoff, Chlor, Brom, Hydroxy, $C_1$-$C_4$-Alkoxy, Cyan, Nitro, $C_1$-$C_2$-Alkyl, $C_1$-$C_6$-Alkoxycarbonyl, Phenoxycarbonyl, Aminocarbonyl, Mono- oder Di-($C_1$-$C_4$-alkyl)-aminocarbonyl, Phenylaminocarbonyl, N-Phenyl-N-$C_1$-$C_2$-alkyl-aminocarbonyl, $C_1$-$C_6$-Alkylcarbonyloxy, Benzoyloxy, $C_1$-$C_6$-Alkoxycarbonyloxy oder Phenoxycarbonyloxy ist, vor allem bevorzugt.

Die erfindungsgemässen Verbindungen werden hergestellt, indem man eine Verbindung der Formel

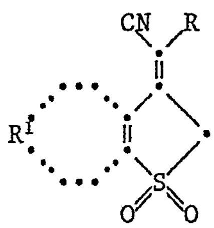

(10)

mit einem Aldehyd der Formel

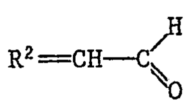

(11)

kondensiert. R, $R^1$ und $R_2$ haben die angegebenen Bedeutungen.

Die Kondensation erfolgt analog zu bekannten Reaktionen ähnlicher Art vorzugsweise in inerten, organischen Lösungsmitteln, z.B. Alkoholen, insbesondere Ethanol, n-Propanol, Isopropanol, n-Butanol, Isobutanol, sec.-Butanol, tert.-Butanol, Methoxy- oder Ethoxyethanol, ferner Benzol, Toluol, Chlorbenzol, Dichlorbenzolen, Chloroform, Dimethylformamid, N-Methylpyrrolidon, Dimethylsulfoxid, Sulfolan oder Acetonitril, bei Temperaturen zwischen 20 und 180°C, vorzugsweise 40-140°C, wobei die Anwesenheit eines Katalysators, vorzugsweise einer organischen Base, z.B. Pyridin, Piperidin, Ammoniumacetat, β-Alanin von Vorteil ist.

Vorzugsweise setzt man den Katalysator zusammen mit einer Säure, z.B. Essigsäure ein.

Die Verbindungen der Formel (10) sind bekannt oder lassen sich auf bekannte Art und Weise herstellen. Ebenfalls bekannt sind die Aldehyde der Formel (11). Anstelle der Aldehyde kann man auch entsprechende funktionell abgewandelte Aldehyde einsetzen z.B. Nitrone oder Imine.

Man erhält die Farbstoffe der Formel (1) in guter Ausbeute und Reinheit. Die Farbstoffe zeichnen sich durch hohe Brillanz und hervorragende Farbstärke aus.

Die erfindungsgemässen Verbindungen der Formel (1) können als Farbstoffe zum Färben und Bedrucken von halbsynthetischen und, insbesondere, synthetischen hydrophoben Fasermaterialien, vor allem Textilmaterialien, verwendet werden. Textilmaterialien aus Mischgeweben, die derartige halbsynthetische bzw. synthetische hydrophobe Textilmaterialien enthalten, können ebenfalls mit Hilfe der erfindungsgemässen Verbindungen gefärbt oder bedruckt werden.

Als halbsynthetische Textilmaterialien kommen vor allem Cellulose-2½-Acetat und Cellulosetriacetat in Frage.

Synthetische hydrophobe Textilmaterialien bestehen vor allem aus linearen, aromatischen Polyestern, beispielsweise solchen aus Terephthalsäure und Glykolen, besonders Aethylenglykol oder Kondensationsprodukten aus Terephthalsäure und 1,4-Bis-(hydroxymethyl)hexahydrobenzol; aus Polycarbonaten, z.B. solchen aus α-α-Dimethyl-4,4'-dihydroxy-diphenylmethan und Phosgen, aus Fasern auf Polyvinylchlorid- sowie Polyamid-Basis.

Die Applikation der erfindungsgemässen Verbindungen auf die Textilmaterialien erfolgt nach bekannten Färbeverfahren. Beispielsweise färbt man Polyesterfasermaterialien im Ausziehverfahren aus wässri ger Dispersion in Gegenwart von üblichen anionischen oder nichtionischen Dispergiermitteln und gegebenenfalls üblichen Quellmitteln (Carrier) bei Temperaturen zwischen 80 und 140°C. Cellulose-2$^1/_2$-acetat färbt man vorzugsweise zwischen ungefähr 65 bis 85°C und Cellulosetriacetat bei Temperaturen bis zu 115°C.

Die neuen Farbstoffe färben im Färbebad gleichzeitig anwesende Wolle und Baumwolle nicht oder nur wenig an (sehr gute Reserve), so dass sie auch gut zum Färben des Polyesteranteils in Polyester/Wolle-und Polyester/Cellulosefaser-Mischungen vewendet werden können.

Die erfindungsgemässen Farbstoffe eignen sich besonders zum Färben nach dem Thermosol-Verfahren und für den Textildruck.

Das genannte Textilmaterial kann in den verschiedensten Verarbeitungsformen vorliegen, wie z.B. als Faser, Faden oder Vlies, als Gewebe oder Gewirke.

Es ist vorteilhaft, die erfindungsgemässen Farbstoffe vor ihrer Verwendung in ein Farbstoffpräparat überzuführen. Hierzu wird der Farbstoff vermahlen, so dass seine Teilchengrösse im Mittel zwischen 0,01 und 10 Mikrometer beträgt. Das Vermahlen kann in Gegenwart von Dispergiermitteln erfolgen. Beispielsweise wird der getrocknete Farbstoff mit einem Dispergiermittel gemahlen oder in Pastenform mit einem Dispergiermittel geknetet und hierauf im Vakuum oder durch Zerstäuben getrocknet. Mit den so erhaltenen Präparaten kann man nach Zugabe von Wasser färben und bedrucken.

Beim Bedrucken wird man die üblichen Verdickungsmittel verwenden, z.B. modifizierte oder nichtmodifizierte natürliche Produkte, beispielsweise Alginate, Britishgummi, Gummi arabicum, Kristallgummi, Johannisbrotkernmehl, Tragant, Carboxymethylcellulose, Hydroxyethylcellulose, Stärke oder synthetische Produkte, beispielsweise Polyacrylamide, Polyacrylsäure oder deren Copolymere oder Polyvinylalkohole.

Die erfindungsgemässen Farbstoffe sind praktisch unempfindlich gegen Carrier und verleihen den genannten Materialien, vor allem dem Polyestermaterial egale rote bis grüne Farbtöne von sehr guten Gebrauchs-Echtheiten, wie vor allem guter Lichtechtheit, guter Sublimierechtheit, Thermofixier-, Plissier-, Chlor- und Nassechtheit wie Wasser-, Schweiss- und Waschechtheit; die Ausfärbungen sind ferner gekennzeichnet durch eine gute pH-Stabilität und sehr gute Reibechtheit. Es werden ausserdem sehr farbstarke Färbungen erzielt, die kein "catalytic fading" zeigen.

Die erfindungsgemässen Farbstoffe können auch gut verwendet werden zur Herstellung von Mischnuancen zusammen mit anderen Farbstoffen. Selbstverständlich können auch Mischungen der erfindungsgemässen Farbstoffe untereinander verwendet werden.

Die neuen Farbstoffe eignen sich auch zum Färben und Pigmentieren von hochmolekularen organischen Materialien, z.B. von Celluloseäthern und -estern, wie Aethylcellulose, Nitrocellulose, Celluloseacetat, Cellulosebutyrat, natürlichen Harzen oder Kunstharzen, wie Polymerisationsharzen oder Kondensationsharzen, z.B. Aminoplasten, insbesondere Harnstoff- und Melamin-Formaldehydharzen, Alkydharzen, Phenoplasten, Polycarbonaten, Polyolefinen, wie Polystyrol, Polyvinylchlorid, Polyethylen, Polypropylen, Polyacrylnitril, Polyacrylsäureester, Polyamiden, Polyurethanen oder Polyestern, Gummi, Casein, Silikon und Silikonharzen, einzeln oder in Mischungen. Dabei spielt es keine Rolle, ob die erwähnten hochmolekularen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die neuen Farbstoffe als Toner oder in Form von Präparaten zu verwenden.

Die vorstehend genannte Verwendung der erfindungsgemässen Dispersionsfarbstoffe der Formel (1) stellt ebenso einen Gegenstand der vorliegenden Erfindung dar wie ein Verfahren zum Färben oder Bedrucken von halbsynthetischem oder synthetischem Fasermaterial, insbesondere Textilmaterial, das darin besteht, eine oder mehrere Verbindungen der Formel (1) auf das genannte Material aufzubringen oder es diesem einzuverleiben. Das genannte hydrophobe Fasermaterial ist vorzugsweise textiles Polyestermaterial.

Ein weiterer Gegenstand der Erfindung ist das durch das genannte Verfahren gefärbte bzw. bedruckte hydrophobe Fasermaterial, vorzugsweise Polyester-Textilmaterial.

Die folgenden Beispiele veranschaulichen die Erfindung weiter, ohne sie darauf zu beschränken. Teile und Prozente beziehen sich, sofern nicht anderes angegeben ist, auf das Gewicht. Die Temperaturen sind in Grad Celsius angegeben.

Beispiel 1:

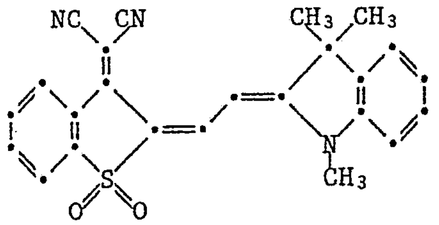

87 Teile 2-Formylmethylen-1,3,3-trimethylindolenin werden mit 100 Teilen 3-Dicyanmethylen-2,3-dihydro-1-benzothiophen-1,1-dioxid in 2000 Teilen absolutem Ethanol unter Zusatz einer Mischung von je 5 Teilen Essigsäure und Pyridin während 2 h gekocht. Nach dem Erkalten wird der Niederschlag filtriert und aus Ethanol umkristallisiert, wobei 110 Teile grüne Kristalle mit einem Schmelzpunkt oberhalb 260° entstehen, welche Polyestermaterial in rotstichig blauen Nuancen färben.

Beispiel 2:

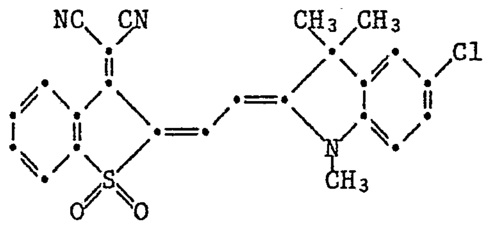

Je 100 Teile 5-Chlor-2-formylmethylen-1,3,3-trimethylindolenin und 3-Dicyanmethylen-2,3-dihydro-1-benzothiophen-1,1-dioxid werden in 2000 Teilen absolutem Ethanol unter Zusatz von je 5 Teilen Essigsäure und Pyridin unter Rückfluss während 3 h gekocht. Der nach Abkühlen ausfallende Niederschlag wird abfiltriert, mit Ethanol nachgewaschen und aus Dimethylformamid umkristallisiert, wobei 130 Teile grüne Kristalle isoliert werden, welche bis 260° nicht schmelzen und Polyestermaterial in rotstichig blauen Farbtönen färbt.

Beispiel 3:

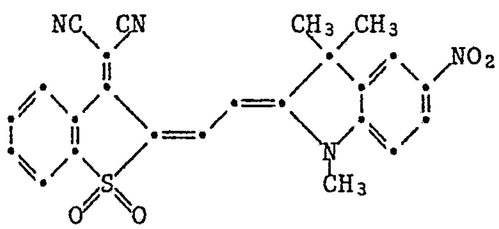

In 350 Teilen Ethanol werden 21.9 Teile 3-Dicyanmethylen-2,3-dihydro-1-benzothiophen-1,1-dioxid und 19 Teile 2-Formyl-5-nitro-1,3,3-trimethylindolenin unter Zusatz von je 5.5 Teilen Essigsäure und Pyridin während 3 h am Rückfluss gekocht.

Der dabei ausfallende grünschimmernde Niederschlag wird nach dem Abkühlen filtriert und in N-Methylpyrrolidon/Wasser umkristallisiert, wobei 34.9 Teile des Produktes mit Smp. >270° erhalten werden. Der Farbstoff färbt Polyestermaterial in rotstichig blauen Farbtönen.

Beispiel 4:

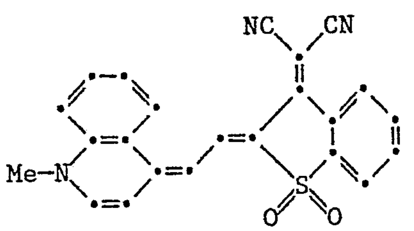

Eine Mischung von 140 Teilen 3-Dicyanmethylen-2,3-dihydro-1-benzothiophen-1,1-dioxid und 71 Teilen

4-Formylmethylen-1-methylchinolin wird unter Zusatz von je 30 Teilen Essigsäure und Pyridin in 2000 Teilen absolutem Ethanol während 4,5 h am Rückfluss gekocht. Nach Abkühlung der Lösung wird der grüngelbe Niederschlag filtriert und aus Dimethylformamid/Wasser umkristallisiert, wobei 20 Teile grüne Kristalle isoliert werden können, die bis 260 Grad nicht schmelzen und Polyestermaterial in grünstichig blauen Nuancen färben.

Beispiel 5:

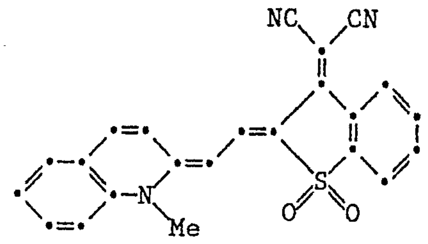

In 1000 Teilen Ethanol wird unter Zusatz von je 15 Teilen Essigsäure und Pyridin eine Mischung von 69 Teilen 3-Dicyanmethylen-2,3-dihydro-1-benzothiophen-1,1-dioxid und 49 Teilen 2-Formylmethylen-1-methylchinolin während 3 h am Rückfluss gekocht. Der beim Abkühlen der Lösung ausfallende Niederschlag wird filtriert und aus Dimethylformamid/Wasser umkristallisiert, wobei 15 Teile grüne Kristalle mit einem Schmelzpunkt oberhalb 260 Grad erhalten werden, welche Polyestermaterial in grünstichig blauen Nuancen färben.

Beispiel 6:

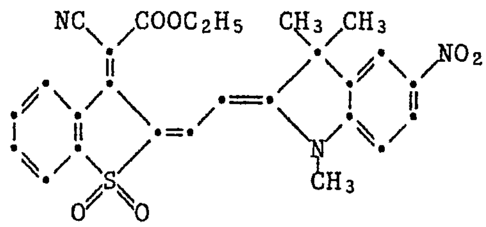

Arbeitet man wie im Beispiel 3 beschrieben, verwendet jedoch anstelle von 21,9 Teilen 3-Dicyanmethylen-2,3-dihydro-1-benzothiophen-1,1-dioxid eine äquivalente Menge 3-Cyancarboethoxy methylen-2,3-dihydro-1-benzothiophen-1,1-dioxid so erhält man den Farbstoff der angegebenen Struktur, welcher Polyestermaterial in rotstichig blauen Nuancen färbt.

Beispiel 7:

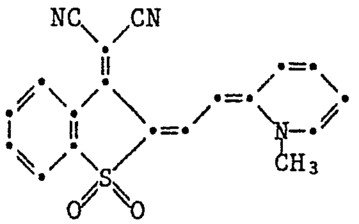

Arbeitet man wie im Beispiel 1 beschrieben, verwendet jedoch anstelle von 2-Formylmethylen-1,3,3-trimethylindolin eine äquivalente Menge 2-Formylmethylen-1-methylpyridin, so erhält man den Farbstoff der angegebenen Struktur, welcher Polyestermaterial in violetten Nuancen färbt.

Beispiel 8:

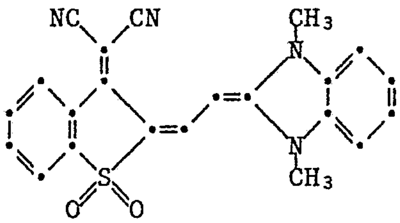

Arbeitet man wie im Beispiel 1 beschrieben, verwendet jedoch anstelle von 2-Formylmethylen-1,3,3-trimethylindolenin eine äquivalente Menge 2-Formylmethylen-1,3-dimethylbenzimidazol, so erhält man den Farbstoff der angegebenen Struktur, welcher Polyestermaterial in roten Nuancen färbt.

Beispiel 9:

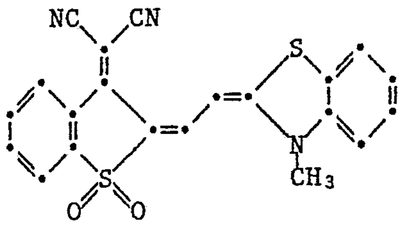

Arbeitet man wie im Beispiel 1 beschrieben, verwendet jedoch anstelle von 2-Formylmethylen-1,3,3-trimethylindolenin eine äquivalente Menge 2-Formylmethylen-3-methylbenzthiazol, so erhält man den Farbstoff der angegebenen Struktur, welcher Polyestermaterial in violetten Nuancen färbt.

Beispiel 10: Man mischt 1 Teil des trockenen, coupagefreien Farbstoffs gemäss Beispiel 1 in einer Glasperlmühle zusammen mit 1 Teil Dinaphthylmethandisulfonat (Na-Salz) und Wasser und mahlt das Gemisch so lange, bis eine Korngrösse von etwa 2 µ oder kleiner erreicht ist. Die entstehende Paste, bestehend aus dem Farbstoff, Dispergator und Wasser, wird anschliessend mit 3 Teilen Natriumligninsulfonat versetzt. Die erhaltene Paste wird sodann der Sprühtrocknung unterworfen, wobei ein pulverförmiges Färbepräparat erhalten wird.

Dieses Färbepräparat kann zum Färben von Polyestermaterialien, z.B. nach dem HT-Verfahren, verwendet werden, wobei das Färbebad eine gute Dispersionsstabilität aufweist. Man erhält eine rotstichig blaue Polyesterfärbung mit guter Lichtechtheit.

Beispiel 11: 1 Teil des gemäss Beispiel 1 erhaltenen Farbstoffs wird mit 2 Teilen einer 50 %igen wässerigen Lösung des Natriumsalzes der Dinaphthylmethandisulfonsäure nass vermahlen und getrocknet.

Dieses Farbstoffpräparat wird mit 40 Teilen einer 10 %igen wässrigen Lösung des Natriumsalzes der N-Benzylheptadecyl-benzimidazoldisulfonsäure verrührt und 4 Teile einer 40 %igen Essigsäurelösung zugegeben. Durch Verdünnen mit Wasser wird daraus ein Färbebad von 4000 Teilen bereitet.

In dieses Bad geht man bei 50° mit 100 Teilen eines Polyesterfaserstoffes ein, steigert die Temperatur innert einer halben Stunde auf 120 bis 130° und färbt eine Stunde in geschlossenem Gefäss bei dieser Temperatur. Anschliessend wird gut gespült. Man erhält eine brillante rotstichig blaue Färbung von guter Lichtechtheit.

## Patentansprüche

1. Dispersionsfarbstoffe der Formel

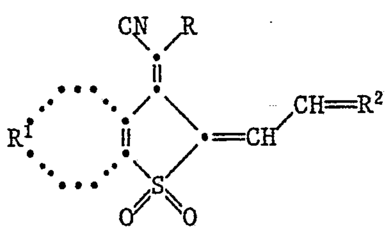

(I) .

worin

R Cyano, Alkoxycarbonyl mit 1 bis 6 Kohlenstoffatomen im Alkoxyteil, Alkylcarbonyl mit 1 bis 6 Kohlenstoffatomen im Alkylteil, Aminocarbonyl, gegebenenfalls N-mono- oder N,N-disubstituiert mit $C_1$-$C_6$-Alkyl oder Nitro,

$R^1$ den Rest eines aromatischen Systems und
$R^2$ den Rest eines 5- oder 6-gliedrigen Ringes mit mindestens einem Stickstoffatom und mindestens einer Doppelbindung, an den aromatische Ringe ankondensiert sein können, bedeutet.

2. Farbstoffe gemäss Anspruch 1, worin R Cyano und $R^1$ den Rest eines gegebenenfalls substituierten Benzol- oder Naphthalringes bedeutet.

3. Farbstoffe gemäss Anspruch 2, worin der $R^1$ enthaltende Ring unsubstituiert ist oder ein- oder zweimal substituiert ist durch:
Chlor, Brom, Hydroxy, Amino, $C_1$-$C_4$-Alkyl, Phenyl, $C_1$-$C_4$-Alkoxy, Phenoxy, Cyan, Nitro, $C_1$-$C_4$-Alkylsulfonyl, Aminosulfonyl, Mono- oder Di-$C_1$-$C_4$-alkylaminosulfonyl, Phenylaminosulfonyl, N-Phenyl-N-$C_1$-$C_2$-alkylaminosulfonyl, $C_1$-$C_6$-Alkoxycarbonyl, Phenoxycarbonyl, Aminocarbonyl, Mono- oder Di-$C_1$-$C_4$-alkylaminocarbonyl, Phenylaminocarbonyl oder N-Phenyl-N-$C_1$-$C_2$-alkyl-aminocarbonyl, $C_1$-$C_6$-Alkylcarbonyloxy, Chlor-oder Brom-$C_1$-$C_2$-alkylcarbonyloxy, $C_1$-$C_6$-Alkoxycarbonyloxy, $C_1$-$C_2$-Alkoxy-$C_2$-$C_6$-alkoxycarbonyloxy, Phenoxycarbonyloxy, $C_1$-$C_4$-Alkylsulfonyloxy, Phenylsulfonyloxy, $C_1$-$C_4$-Alkylcarbonylamino, $C_1$-$C_2$-Alkoxy-$C_{2-4}$-alkoxycarbonylamino, Chlor- oder Brom- $C_1$-$C_2$-alkylcarbonylamino, $C_1$-$C_4$-Alkoxycarbonylamino, Phenoxycarbonylamino, Amino-carbonylamino, Mono- oder Di-$C_1$-$C_4$-alkylaminocarbonylamino, Phenylaminocarbonylamino, N-Phenyl-N-$C_1$-$C_2$-alkylaminocarbonylamino, Benzoyloxy, Naphthoyloxy, Benzoylamino, Di-$C_1$-$C_4$-alkylaminosulfonyloxy, Mono- oder Di-$C_1$-$C_4$-alkylamino-carbonyloxy oder Phenylaminocarbonyloxy.

4. Farbstoffe gemäss Anspruch 3, worin $R^1$ der Rest eines Benzolringes ist, welcher unsubstituiert ist oder substituiert durch
Chlor, Brom, Hydroxy, $C_1$-$C_4$-Alkoxy, Cyan, Nitro, $C_1$-$C_2$-Alkyl, $C_1$-$C_6$-Alkoxycarbonyl, Phenoxycarbonyl, Aminocarbonyl, Mono- oder Di-($C_1$-$C_4$-alkyl)-aminocarbonyl, Phenylaminocarbonyl, N-Phenyl-N-$C_1$-$C_2$-alkyl-aminocarbonyl, $C_1$-$C_6$-Alkylcarbonyloxy, Benzoyloxy, $C_1$-$C_6$-Alkoxycarbonyloxy oder Phenoxycarbonyloxy.

5. Farbstoffe gemäss einem der Ansprüche 1-4, worin $R^2$ einen der folgenden Reste darstellt.

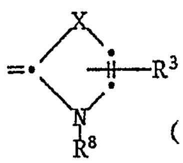 (2) 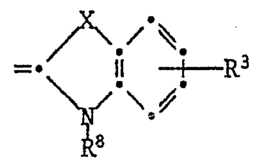 (3) 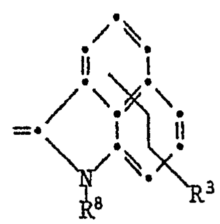 (4)

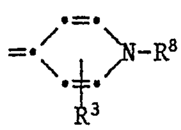 (5) 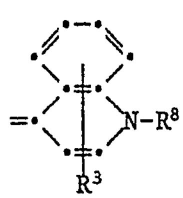 (6) 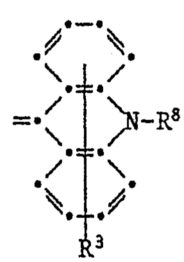 (7)

worin
$R^8$ einen $C_1$-$C_6$-Alkylrest,
X -O-, -S-, -CH = CH-, -$NR^4$- oder

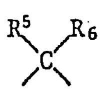

ist, wobei $R^4$ Wasserstoff, Phenyl oder $C_1$-$C_6$Alkyl, $R^5$ und $R^6$ unabhängig voneinander je $C_1$-$C_4$-Alkyl oder $R^5$ und $R^6$ zusammen mit dem C-Atom, an das sie gebunden sind, einen $C_5$-$C_7$-Cycloalkylrest bedeuten, und
$R^3$ Wasserstoff, Chlor, Brom, Hydroxy, $C_1$-$C_4$-Alkyl, $C_1$-$C_4$-Alkoxy, Cyano, Nitro, Amino, Mono- oder Di-($C_1$-$C_4$-alkyl)-amino, Phenylamino, Phenoxy, Phenyl, $C_1$-$C_4$-Alkylsulfonyl, Aminocarbonyl, Mono-oder Di-($C_1$-$C_4$-alkyl)-aminocarbonyl, $C_1$-$C_6$-Alkoxycarbonyl, Phenoxycarbonyl, Phenylaminocarbonyl, N-Phenyl-N-$C_1$-$C_2$-alkylaminocarbonyl, $C_1$-$C_6$-Alkyl-carbonyloxy, Benzoyloxy, $C_1$-$C_6$-Alkoxy-carbonyloxy, Phenoxycarbonyloxy, Aminosulfonyl, Mono- oder Di-($C_1$-$C_4$-alkyl)-aminosulfonyl ist.

6. Farbstoffe gemäss Anspruch 5, worin $R^2$ eine Rest der Formel

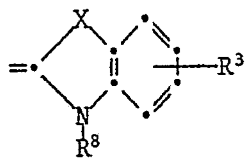

(8)

darstellt, worin
$R^8$ einen $C_1$-$C_4$-Alkylrest,
X -S-, -CH = CH- oder

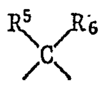

ist, worin $R^5$ und $R^6$ je Methyl oder Ethyl oder $R^5$ und $R^6$ zusammen mit dem C-Atom, an das sie gebunden sind Cyclohexyl bedeuten und
$R^3$ Wasserstoff, Chlor, Brom, Nitro, Cyano, $C_1$-$C_4$-Alkoxy, $C_1$-$C_2$-Alkyl, Amino, Mono- oder Di-($C_1$-$C_4$)-alkylamino, Hydroxy, Phenoxy oder Phenylamino ist.

7. Farbstoffe gemäss Anspruch 1 der Formel

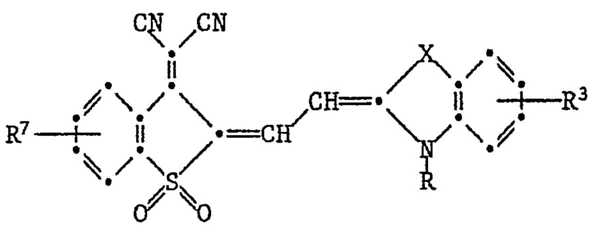

(9)

worin
R einen $C_1$-$C_4$-Alkylrest,
X -S-, -CH = CH- oder

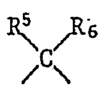

ist, worin $R^5$ und $R^6$ je Methyl oder Ethyl oder $R^5$ und $R^6$ zusammen mit dem C-Atom, an das sie gebunden sind, Cyclohexyl bedeuten und
$R^3$ Wasserstoff, Chlor, Brom, Nitro, Cyano, $C_1$-$C_4$-Alkoxy, $C_1$-$C_2$-Alkyl, Amino, Mono- oder Di-($C_1$-$C_4$)-alkylamino, Hydroxy, Phenoxy oder Phenylamino und
$R^7$ Wasserstoff, Chlor, Brom, Hydroxy, $C_1$-$C_4$-Alkoxy, Cyan, Nitro, $C_1$-$C_2$-Alkyl, $C_1$-$C_6$-Alkoxycarbonyl, Phenoxycarbonyl, Aminocarbonyl, Mono- oder Di-($C_1$-$C_4$-alkyl)-aminocarbonyl, Phenylaminocarbonyl, N-Phenyl-N-$C_1$-$C_2$-alkyl-aminocarbonyl, $C_1$-$C_6$-Alkylcarbonyloxy, Benzoyloxy, $C_1$-$C_6$-Alkoxycarbonyloxy oder Phenoxycarbonyloxy ist.

8. Verfahren zur Herstellung der Farbstoffe der Formel (1) gemäss Anspruch 1, dadurch gekennzeichnet, dass man eine Verbindung der Formel

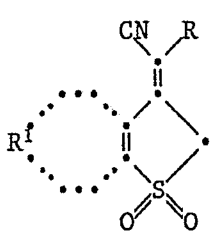

(10)

mit einem Aldehyd der Formel

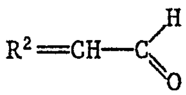 (11)

kondensiert.

9. Verfahren gemäss Anspruch 8, dadurch gekennzeichnet, dass man die Reaktion in einem inerten Lösungsmittel unter Zusatz eines Katalysators und einer Säure bei etwa 40 bis 140° C durchführt.

10. Verwendung der Verbindungen der Formel (1) gemäss Anspruch 1 zum Färben und Pigmentieren von hochmolekularen organischen Materialien.

11. Verwendung gemäss Anspruch 10 zum Färben oder Bedrucken von halbsynthetischen oder synthetischen Fasermaterialien, insbesondere Textilmaterialien aus linearen aromatischen Polyestern.

12. Verwendung gemäss Anspruch 10 zum Färben von thermoplastischen Kunststoffen in der Schmelze.

13. Das gemäss einem der Ansprüche 10 bis 12 gefärbte oder bedruckte Material.